# EUROPEAN PATENT APPLICATION

(11) **EP 4 645 671 A1**
(43) Date of publication of application: **05.11.2025**
(21) Application number: 25159782.9
(22) Date of filing: 25.02.2025
(51) Int. Cl.: H02M 7/49, H02M 1/00, H02M 5/458, H02M 1/12, H02M 3/158

(54) **POWER CONVERSION SYSTEM WITH VOLTAGE STEP CHANGE AND VOLTAGE POLARITY CONVERSION**

(30) Priority: 30.04.2024 US 202463640414 P; 09.09.2024 CN 202411254582
(71) Applicant: DELTA ELECTRONICS, INC., Taoyuan City 320023 (TW)
(72) Inventor: LI, Sheng-Hua, 320023 Chungli Dist.,Taoyuan City (TW)
(74) Representative: 2K Patentanwälte Blasberg Kewitz & Reichel

(57) **Abstract**

A power conversion system with voltage step change and voltage polarity conversion includes a three-phase AC-to-DC conversion circuit (100), a plurality of DC-to-DC conversion circuits (200), a voltage step change circuit (300), and a voltage polarity conversion circuit (400). The voltage step change circuit (300) receives a DC voltage (V1), a first voltage (Vp1), and a second voltage (Vn1), and adds the first voltage (Vp1) to the DC voltage (V1) or subtracts the second voltage (Vn1) from the DC voltage (V1) so as to provide a step-changed DC voltage (Vx). The voltage polarity conversion circuit (400) receives the step-changed DC voltage (Vx) and converts a polarity of the step-changed DC voltage (Vx) to provide a DC output voltage (Vo1).

## Description

### BACKGROUND

### Technical Field

The present disclosure relates to a power conversion system, and more particularly to a power conversion system with voltage step change and voltage polarity conversion.

### Description of Related Art

The statements in this section merely provide background information related to the present disclosure and do not necessarily constitute prior art.

Power supplies with dual voltages are necessary and important for semiconductor wafer plating, and it is particularly important for the power supply with no ripple component to provide high-quality dual voltage. Therefore, if the output ripple component cannot be completely eliminated, it will cause uneven plating on the wafer surface. Furthermore, if the output dynamic response is insufficiently rapid, the desired voltage step change will not be achieved.

Therefore, how to design a power conversion system with voltage step change and voltage polarity conversion to solve the problems and technical bottlenecks in the existing technology has become a critical topic in this field.

### SUMMARY

An objective of the present disclosure is to provide a power conversion system with voltage step change and voltage polarity conversion. The power conversion system with voltage step change and voltage polarity conversion includes a three-phase AC-to-DC conversion circuit, a plurality of DC-to-DC conversion circuits, a voltage step change circuit, and a voltage polarity conversion circuit. The three-phase AC-to-DC conversion circuit receives a three-phase power supply, and converts the three-phase power supply into a DC power supply. The plurality of DC-to-DC conversion circuits receive the DC power supply, and respectively convert the DC power supply to generate a DC voltage, a first voltage, and a second voltage. The voltage step change circuit receives the DC voltage, the first voltage, and the second voltage, and adds the first voltage to the DC voltage or subtracts the second voltage from the DC voltage so as to provide a step-changed DC voltage. The voltage polarity conversion circuit receives the step-changed DC voltage, and converts a polarity of the step-changed DC voltage to provide a DC output voltage.

Another objective of the present disclosure is to provide a power conversion system with voltage step change and voltage polarity conversion. The power conversion system with voltage step change and voltage polarity conversion includes a three-phase AC-to-DC conversion circuit, a plurality of DC-to-DC conversion circuits, a second voltage polarity conversion circuit, a voltage step change circuit, and a first voltage polarity conversion circuit. The three-phase AC-to-DC conversion circuit receives a three-phase power supply, and converts the three-phase power supply into a DC power supply. The plurality of DC-to-DC conversion circuits receive the DC power supply, and respectively convert the DC power supply to generate a DC voltage and a voltage. The second voltage polarity conversion circuit receives the voltage, and converts a polarity of the voltage to provide an adjusted voltage. The voltage step change circuit receives the DC voltage and the adjusted voltage, and adds the DC voltage to the adjusted voltage to provide a step-changed DC voltage. The first voltage polarity conversion circuit receives the step-changed DC voltage, and converts a polarity of the step-changed DC voltage to provide a DC output voltage.

Further another objective of the present disclosure is to provide a power conversion system with voltage step change and voltage polarity conversion. The power conversion system with voltage step change and voltage polarity conversion includes a three-phase AC-to-DC conversion circuit, a plurality of DC-to-DC conversion circuits, a first voltage polarity conversion circuit, a second voltage polarity conversion circuit, and a voltage step change circuit. The three-phase AC-to-DC conversion circuit receives a three-phase power supply, and converts the three-phase power supply into a DC power supply. The plurality of DC-to-DC conversion circuits receive the DC power supply, and respectively convert the DC power supply to generate a DC voltage and a voltage. The first voltage polarity conversion circuit receives the DC voltage, and converts a polarity of the DC voltage to provide a polarity conversion DC voltage. The second voltage polarity conversion circuit receives the voltage, and converts a polarity of the voltage to provide an adjusted voltage. The voltage step change circuit receives the polarity conversion DC voltage and the adjusted voltage, and adds the polarity conversion DC voltage to the adjusted voltage to provide a DC output voltage.

Accordingly, the power conversion system of the present disclosure can generate the output voltage with voltage step changes and voltage polarity conversion.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a block diagram of a power conversion system with voltage step change and voltage polarity conversion according to a first embodiment of the present disclosure.
FIG. 2 is a block diagram of the power conversion system with voltage step change and voltage polarity conversion according to a second embodiment of the present disclosure.
FIG. 3 is a block diagram of the power conversion system with voltage step change and voltage polarity conversion according to a third embodiment of the present disclosure.
FIG. 4 is a block diagram of a DC-to-DC conversion circuit according to the present disclosure.
FIG. 5 is a block circuit diagram of an active linear filter unit according to the present disclosure.
FIG. 6 is a circuit diagram of a three-phase AC-to-DC conversion circuit and a DC-to-DC conversion circuit according to the present disclosure.
FIG. 7A is a circuit diagram of a voltage step change circuit according to a first embodiment of the present disclosure.
FIG. 7B is a schematic waveform diagram of an input voltage and an output voltage of the voltage step change circuit shown in FIG. 7A.
FIG. 8A is a circuit diagram of the voltage step change circuit according to a second embodiment of the present disclosure.
FIG. 8B is a schematic waveform diagram of an input voltage and an output voltage of the voltage step change circuit shown in FIG. 8A.
FIG. 9A is a circuit diagram of a voltage polarity conversion circuit according to the present disclosure.
FIG. 9B are waveforms of an input voltage and an output voltage of the voltage polarity conversion circuit and control signals of bridge arm switches shown in FIG. 9A.
FIG. 10 is a block diagram of a power conversion system including the two power conversion structures in FIG. 1.
FIG. 11 is a block diagram of a power conversion system including the two power conversion structures in FIG. 2.
FIG. 12 is a block diagram of a power conversion system including the two power conversion structures in FIG. 3.
FIG. 13 is a schematic waveform diagram of a DC output voltage of the power conversion system according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

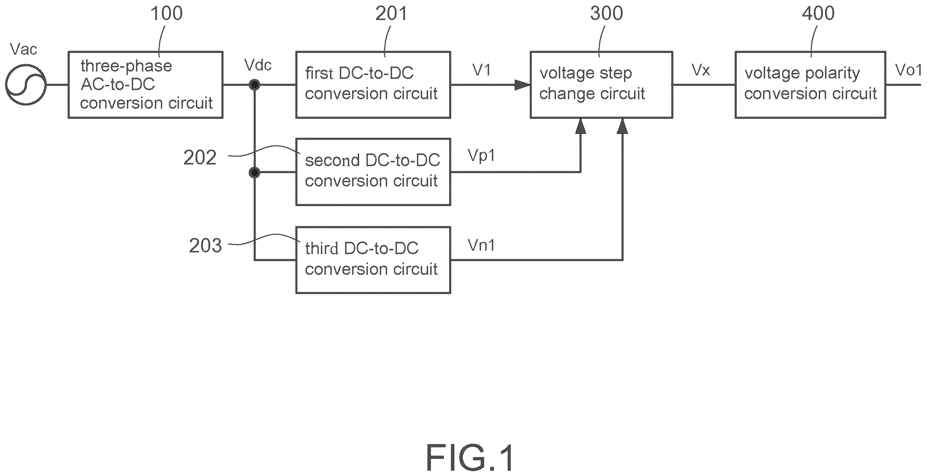

Please refer to FIG. 1, which shows a block diagram of a power conversion system with voltage step change and voltage polarity conversion according to a first embodiment of the present disclosure. The power conversion system with voltage step change and voltage polarity conversion (hereinafter abbreviated as "power conversion system") includes a three-phase AC-to-DC conversion circuit 100, a plurality of DC-to-DC conversion circuits 201,202,203, a voltage step change circuit 300, and a voltage polarity conversion circuit 400. In the embodiment, the number of the plurality of DC-to-DC conversion circuits 201,202,203 is three as an example, that is, the plurality of DC-to-DC conversion circuits 201,202,203 include a first DC-to-DC conversion circuit 201, a second DC-to-DC conversion circuit 202, and a third DC-to-DC conversion circuit 203.

The three-phase AC-to-DC conversion circuit 100 receives a three-phase power supply Vac, and more particularly to a three-phase AC power supply, and converts the three-phase power supply Vac into a DC power supply Vdc. The plurality of DC-to-DC conversion circuits, that is, three DC-to-DC conversion circuits 201,202,203 receive the DC power supply Vdc, and respectively convert the DC power supply Vdc to generate a DC voltage V1, a first voltage Vp1, and a second voltage Vn1. In the embodiment, the first DC-to-DC conversion circuit 201 receives the DC power supply Vdc, and converts the DC power supply Vdc to generate the DC voltage V1. The second DC-to-DC conversion circuit 202 receives the DC power supply Vdc, and converts the DC power supply Vdc to generate a first voltage Vp1. The three DC-to-DC conversion circuit 203 receives the DC power supply Vdc, and converts the DC power supply Vdc to generate a second voltage Vn1.

The voltage step change circuit 300 receives the DC voltage V1, the first voltage Vp1, and the second voltage Vn1. The voltage step change circuit 300 adds the first voltage Vp1 to the DC voltage V1 or subtracts the second voltage Vn1 from the DC voltage V1 so as to provide a step-changed DC voltage Vx. The operation of the voltage step change circuit 300 will be described in detail later.

The voltage polarity conversion circuit 400 receives the step-changed DC voltage Vx, and converts a polarity of the step-changed DC voltage Vx to provide a DC output voltage Vo1. The operation of the voltage polarity conversion circuit 400 will be described in detail later.

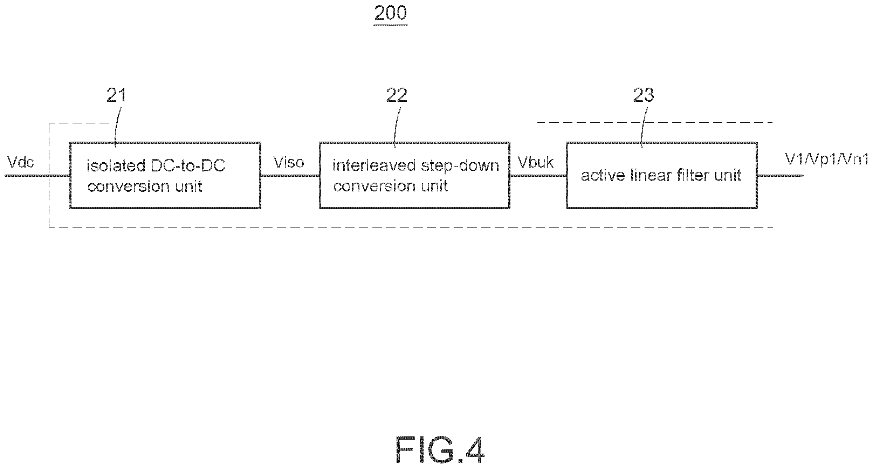

Please refer to FIG. 4, which shows a block diagram of a DC-to-DC conversion circuit according to the present disclosure. In particular, the DC-to-DC conversion circuit is any one of the plurality of DC-to-DC conversion circuits 201,202,203 shown in FIG. 1, and indicated by the DC-to-DC conversion circuit 200. The DC-to-DC conversion circuit 200 includes an isolated DC-to-DC conversion unit 21, an interleaved step-down conversion unit 22, and an active linear filter unit 23. The isolated DC-to-DC conversion unit 21 receives the DC power supply Vdc, and converts the DC power supply Vdc into an isolated DC voltage Viso. The interleaved step-down conversion unit 22 receives the isolated DC voltage Viso, and converts the isolated DC voltage Viso into a step-down voltage Vbuk. The active linear filter unit 23 receives the step-down voltage Vbuk, and converts the step-down voltage Vbuk into the DC voltage V1 or the first voltage Vp1 or the second voltage Vn1.

As shown in FIG. 1, the isolated DC-to-DC conversion unit 21, the interleaved step-down conversion unit 22, and the active linear filter unit 23 of the first DC-to-DC conversion circuit 201 convert DC power supply Vdc into the DC voltage V1. Similarly, the isolated DC-to-DC conversion unit 21, the interleaved step-down conversion unit 22, and the active linear filter unit 23 of the second DC-to-DC conversion circuit 202 convert DC power supply Vdc into the first voltage Vp1. Similarly, the isolated DC-to-DC conversion unit 21, the interleaved step-down conversion unit 22, and the active linear filter unit 23 of the third DC-to-DC conversion circuit 203 convert DC power supply Vdc into the second voltage Vn1.

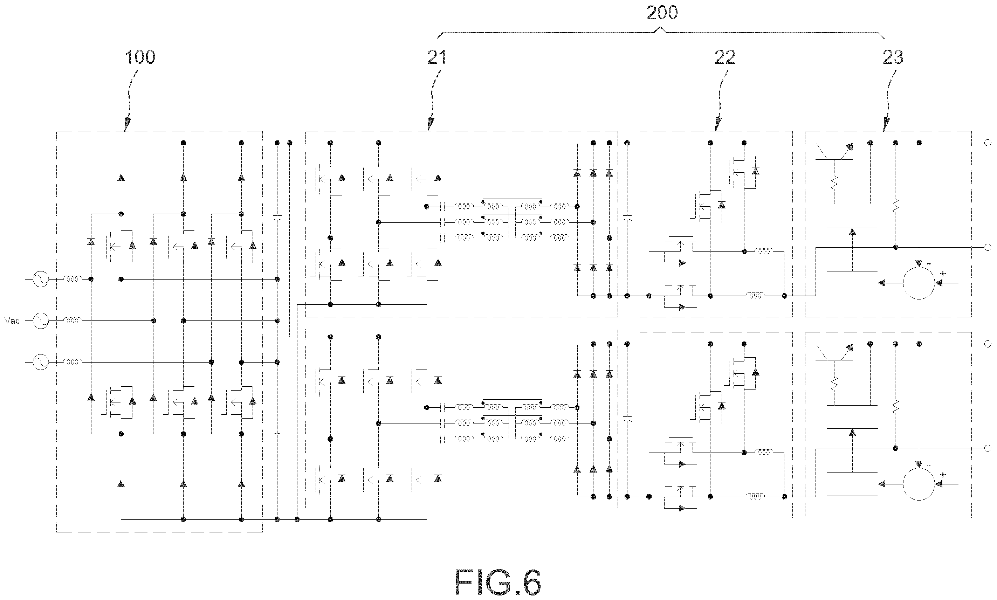

Specifically, please refer to FIG. 6, which shows a circuit diagram of a three-phase AC-to-DC conversion circuit and a DC-to-DC conversion circuit according to the present disclosure. In particular, in FIG. 6, two DC-to-DC conversion circuits 200, that is, a dual-channel output structure are illustrated.

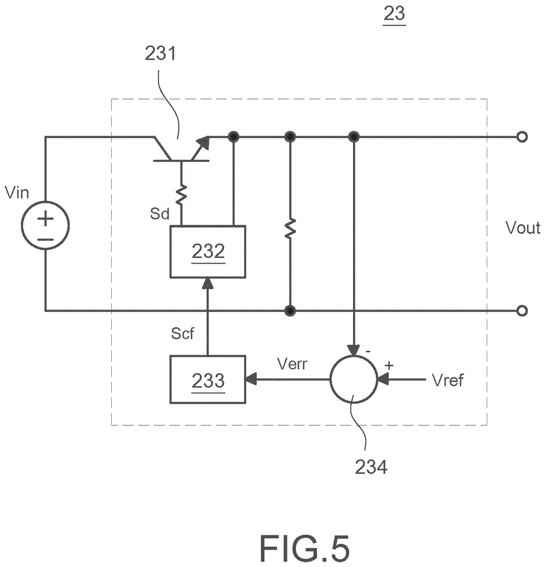

Please refer to FIG. 5, which shows a block circuit diagram of an active linear filter unit according to the present disclosure. As shown in FIG. 4, the active linear filter unit 23 receives the step-down voltage Vbuk, and converts the step-down voltage Vbuk into the DC voltage V1 or the first voltage Vp1 or the second voltage Vn1. As shown in FIG. 5, the active linear filter unit 23 includes a transistor switch 231, a driver 232, a controller 233, and an addition/subtraction calculator 234. The transistor switch 231 receives the input voltage Vin with a switch ripple component, corresponding to FIG. 4, the step-down voltage Vbuk is the input voltage Vin of the active linear filter unit 23. Incidentally, the so-called switch ripple component here refers to the high-frequency ripple component caused by switching the power switches when the front-stage power conversion circuit performs power conversion. Therefore, the active linear filter unit 23 may be used to replace the traditional high-frequency filter to filter out this ripple component, thereby increasing the conversion efficiency of the overall circuit. In the embodiment, the transistor switch 231 is a bipolar junction transistor (BJT), but this does not limit the present disclosure, that is, the transistor switch 231 may be a metal-oxide-semiconductor field-effect transistor (MOSFET) or an insulated gate bipolar transistor (IGBT).

The driver 232 is connected to the transistor switch 231. In the embodiment, the driver 232 is connected to a base and an emitter of a npn BJT. The addition/subtraction calculator 234 receives a reference voltage Vref and an output voltage Vout of the active linear filter unit 23, corresponding to FIG. 4, the DC voltage V1 or the first voltage Vp1 or the second voltage Vn1 is the output voltage Vout of the active linear filter unit 23. The addition/subtraction calculator 234 calculates an error voltage Verr between the reference voltage Vref and the DC voltage V1, the first voltage Vp1, or the second voltage Vn1. In the embodiment, the addition/subtraction calculator 234 calculates the reference voltage Vref minus the output voltage Vout to acquire the error voltage Verr, and therefore if the reference voltage Vref as the target voltage is greater than the output voltage Vout, the error voltage Verr is positive; on the contrary, if the reference voltage Vref is less than the output voltage Vout, the error voltage Verr is negative.

The controller 233 receives the error voltage Verr, and generate a filter control signal Scf to control the driver 232 to generate a driver signal Sd to control the transistor switch 231 so that the DC voltage V1, the first voltage Vp1, or the second voltage Vn1 without the ripple component is provided. In the embodiment, the controller 233 is a proportional-integral (PI) controller, but this does not limit the present disclosure, that is, the controller 233 may be a proportional-integral-derivative (PID) controller or a proportional-derivative (PD) controller. Therefore, the controller 233 adjusts its own control reference according to the error voltage Verr so that the generated filter control signal Scf controls the driver 232 to drive the transistor switch 231 to be turned on and turned off. Accordingly, there is no switch ripple component in the output voltage Vout of the active linear filter unit 23 (that is, the DC voltage V1 or the first voltage Vp1 or the second voltage Vn1), thereby achieving the effect of filtering out (eliminating) the switch ripple component of the input voltage Vin to acquire the output voltage Vout without ripple components. However, any circuit or component that can be used to implement the active filter function should be included in the scope of the present disclosure.

Accordingly, by accurately determining the DC offset, not only the transistor switch 231 can be controlled to operate in the linear region, but the power consumption of the transistor switch 231 can also be minimized. In other words, the DC offset is almost equal to a voltage between the collector and emitter of transistor switch 231. Therefore, as long as the DC offset is selected to be the smallest and the transistor switch 231 can be maintained to operate in the linear region, it can be ensured that the active linear filter unit 23 can both eliminate the switch ripple component and minimize the power consumption.

Compared with traditional linear voltage regulators, since traditional linear voltage regulators can only provide fixed DC voltages (but cannot provide dynamic ramp voltages) and generally consume large amounts of power, the active linear filter unit 23 is significantly better than the traditional linear regulator in terms of efficiency and design flexibility.

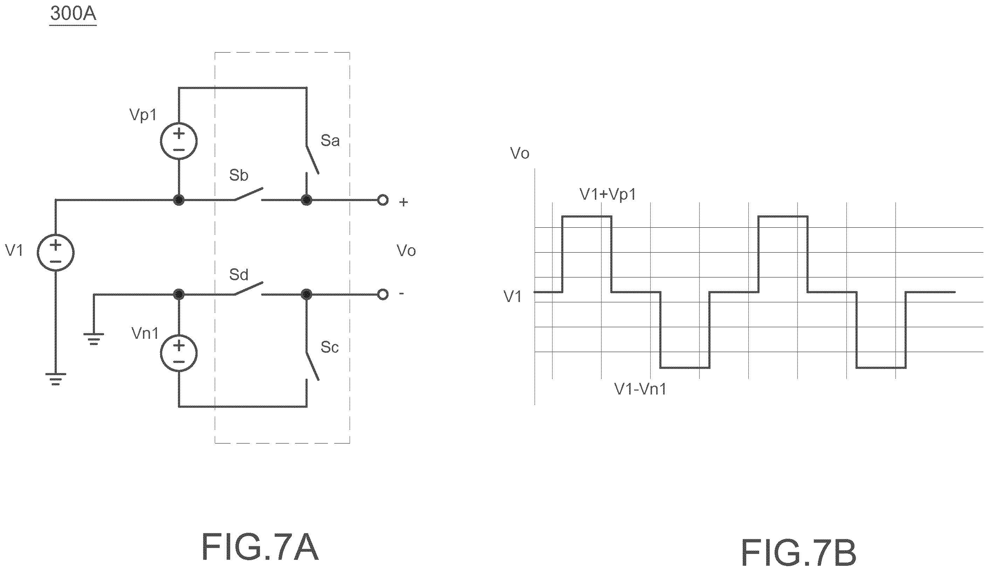

Please refer to FIG. 7A, which shows a circuit diagram of a voltage step change circuit according to a first embodiment of the present disclosure. As shown in FIG. 1, the voltage step change circuit 300A is used to add the first voltage Vp1 to the DC voltage V1 or subtract the second voltage Vn1 from the DC voltage V1 so as to provide the output voltage Vo. Corresponding to FIG. 1, the step-changed DC voltage Vx is the output voltage Vo of the voltage step change circuit 300A. Please refer to FIG. 7B, which shows a schematic waveform diagram of an input voltage and an output voltage of the voltage step change circuit shown in FIG. 7A, and the specific description is as follows.

As shown in FIG. 7A, the voltage step change circuit 300A includes a first switch assembly and a second switch assembly. The first switch assembly includes a first switch Sa and a second switch Sb, and the first switch assembly is connected to the first voltage Vp1. The second switch assembly includes a third switch Sc and a fourth switch Sd, and the second switch assembly is connected to the second voltage Vn1. Specifically, a first terminal of the first switch Sa is connected to a positive polarity terminal of the first voltage Vp1, a first terminal of the second switch Sb is connected to a negative polarity terminal of the first voltage Vp1 and connected to the DC voltage V1. A second terminal of the first switch Sa is connected to a second terminal of the second switch Sb for providing a positive voltage terminal of the step-changed DC voltage Vx shown in FIG. 1 (i.e., the output voltage Vo shown in FIG. 7A).

A first terminal of the third switch Sc is connected to a negative polarity terminal of the second voltage Vn1, a first terminal of the fourth switch Sd is connected to a positive polarity terminal of the second voltage Vn1 and connected to a ground terminal. A second terminal of the third switch Sc is connected to a second terminal of the fourth switch Sd for providing a negative voltage terminal of the step-changed DC voltage Vx.

Accordingly, when the first switch Sa and the fourth switch Sd are turned on and the second switch Sb and the third switch Sc are turned off, the step-changed DC voltage Vx is equal to the DC voltage V1 plus the first voltage Vp1. When the second switch Sb and the third switch Sc are turned on and the first switch Sa and the fourth switch Sd are turned off, the step-changed DC voltage Vx is equal to the DC voltage V1 minus the second voltage Vn1. Therefore, the step increase (i.e., V1+Vp1) control or the step decrease (i.e., V1-Vn1) control of the DC voltage V1 is achieved, as shown in the waveform of FIG. 7B.

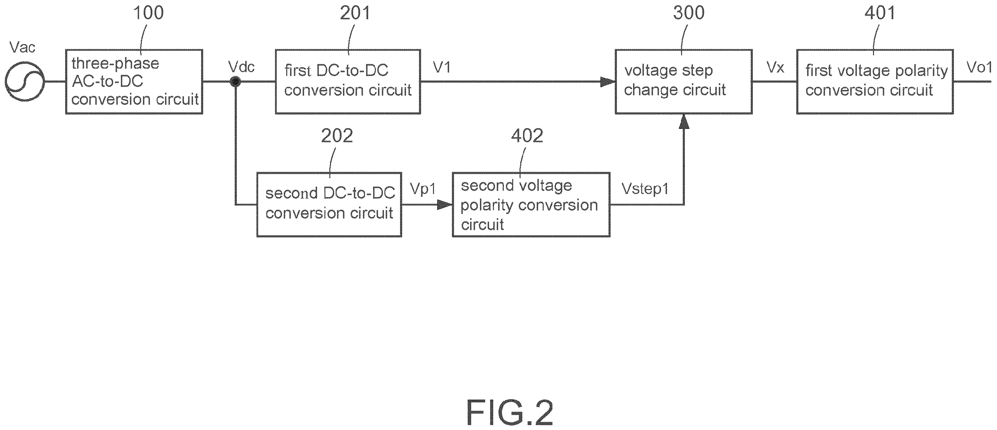

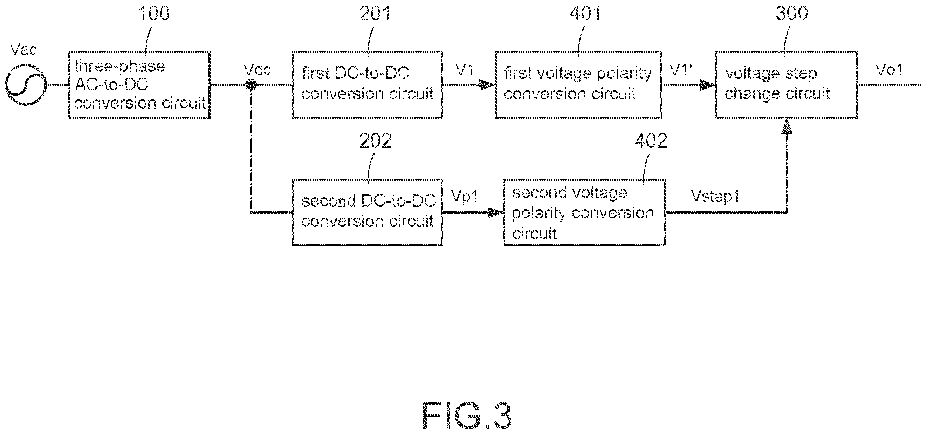

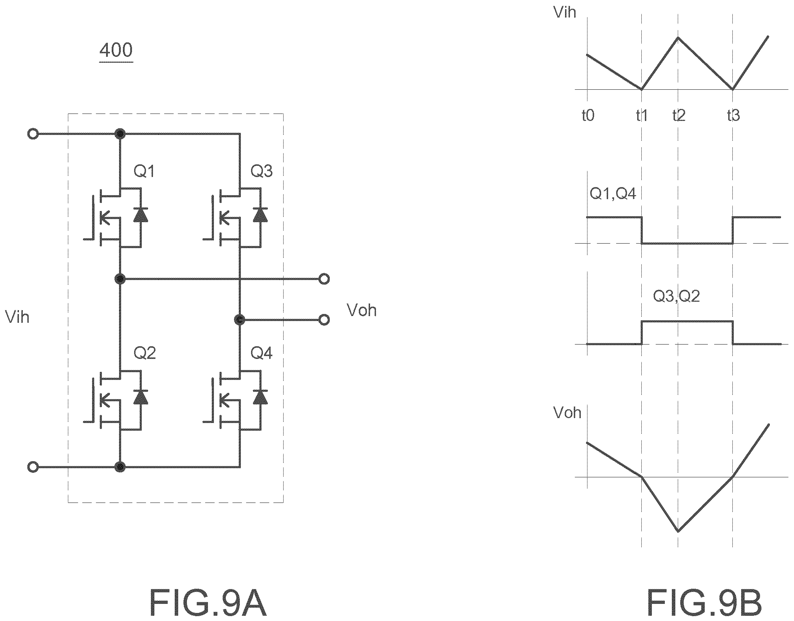

Please refer to FIG. 9A, which shows a circuit diagram of a voltage polarity conversion circuit according to the present disclosure. In particular, the voltage polarity conversion circuit is the voltage polarity conversion circuit 400 shown in FIG. 1 (or any one of the first voltage polarity conversion circuit 401 and the second voltage polarity conversion circuit 402 shown in FIG. 2 and FIG. 3). The voltage polarity conversion circuit 400 includes a first bridge arm and a second bridge arm. The first bridge arm is connected to the second bridge arm in parallel. The first bridge arm includes a first upper switch Q1 and a first lower switch Q2 connected in series. The second bridge arm includes a second upper switch Q3 and a second lower switch Q4 connected in series. In particular, the first upper switch Q1 and the second lower switch Q4 are simultaneously turned on or turned off, the first lower switch Q2 and the second upper switch Q3 are simultaneously turned on or turned off.

Please refer to FIG. 9B, which shows waveforms of an input voltage and an output voltage of the voltage polarity conversion circuit and control signals of bridge arm switches shown in FIG. 9A. Corresponding to FIG. 1, the input voltage Vih is the step-changed DC voltage Vx of the voltage step change circuit 300, and the output voltage Voh is the DC output voltage Vo1. As shown in FIG. 9B, during time t1 to time t3, the voltage polarity conversion circuit 400 converts the polarity of the input voltage Vih from positive to negative, and during time t0 to time t1 and after time t3, the polarity of the input voltage Vih remains positive. Therefore, during time t0 to time t1 and after time t3, the first upper switch Q1 and the second lower switch Q4 are controlled to be turned on, and the first lower switch Q2 and the second upper switch Q3 are controlled to be turned off. Moreover, during time t1 to time t3, the first upper switch Q1 and the second lower switch Q4 are controlled to be turned off, and the first lower switch Q2 and the second upper switch Q3 are controlled to be turned on. Accordingly, the polarity of the output voltage Voh and the input voltage Vih are opposite during time t1 to time t3.

Please refer to FIG. 2, which shows a block diagram of the power conversion system with voltage step change and voltage polarity conversion according to a second embodiment of the present disclosure. The power conversion system includes a three-phase AC-to-DC conversion circuit 100, a plurality of DC-to-DC conversion circuits 201,202, a second voltage polarity conversion circuit 402, a voltage step change circuit 300, and a first voltage polarity conversion circuit 401. In the embodiment, the number of the plurality of DC-to-DC conversion circuits 201,202 is two as an example, that is, the plurality of DC-to-DC conversion circuits 201,202 include a first DC-to-DC conversion circuit 201 and a second DC-to-DC conversion circuit 202.

The three-phase AC-to-DC conversion circuit 100 receives a three-phase power supply Vac, and converts the three-phase power supply Vac into a DC power supply Vdc. The two DC-to-DC conversion circuits 201,202 receive the DC power supply Vdc, and respectively convert the DC power supply Vdc to generate a DC voltage V1 and a voltage Vp1. In the embodiment, the first DC-to-DC conversion circuit 201 receives the DC power supply Vdc, and converts the DC power supply Vdc to generate the DC voltage V1. The second DC-to-DC conversion circuit 202 receives the DC power supply Vdc, and converts the DC power supply Vdc to generate the voltage Vp1.

The second voltage polarity conversion circuit 402 receives the voltage Vp1, and converts a polarity of the voltage Vp1 to provide an adjusted voltage Vstep1. The voltage step change circuit 300 receives the DC voltage V1 and the adjusted voltage Vstep1, and adds the DC voltage V1 to the adjusted voltage Vstep1 to provide a step-changed DC voltage Vx. The operation of the voltage step change circuit 300 will be described in detail later.

The first voltage polarity conversion circuit 401 receives the step-changed DC voltage Vx, and converts a polarity of the step-changed DC voltage Vx to provide a DC output voltage Vo1.

For a detailed description of the first DC-to-DC conversion circuit 201 and the second DC-to-DC conversion circuit 202 as well as the first voltage polarity conversion circuit 401 and the second voltage polarity conversion circuit 402 in this embodiment, please refer to the previous description and will not be repeated here.

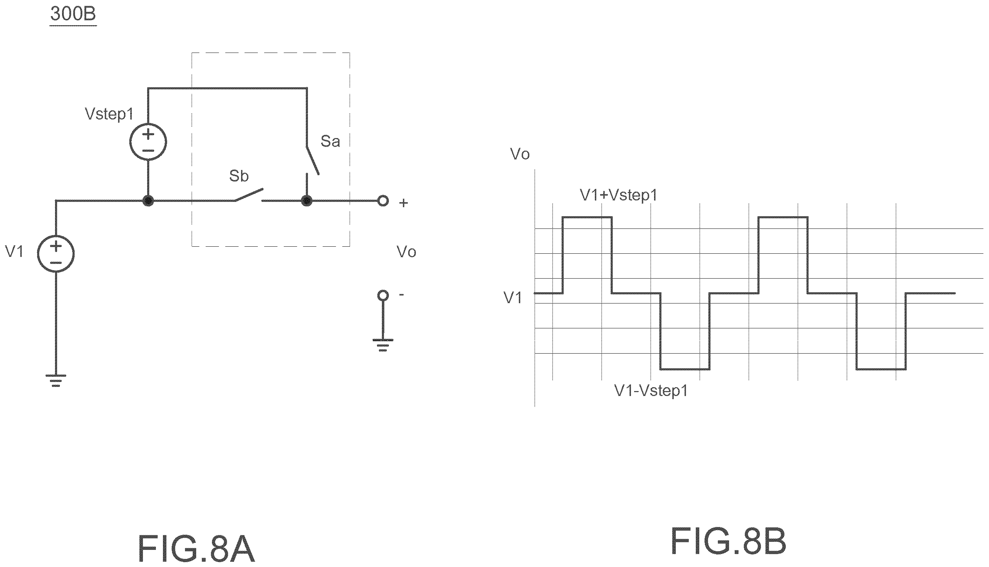

Please refer to FIG. 8A, which shows a circuit diagram of the voltage step change circuit according to a second embodiment of the present disclosure. As shown in FIG. 2, the voltage step change circuit 300B receives the DC voltage V1 and the adjusted voltage Vstep1, and adds the DC voltage V1 to the adjusted voltage Vstep1 to provide an output voltage Vo (i.e., a step-changed DC voltage Vx). Please refer to FIG. 8B, which shows a schematic waveform diagram of an input voltage and an output voltage of the voltage step change circuit shown in FIG. 8A, and the specific description is as follows.

The voltage step change circuit 300B includes a switch assembly. The switch assembly includes a first switch Sa and a second switch Sb, and the switch assembly connected to an adjusted voltage Vstep1. Specifically, a first terminal of the first switch Sa is connected to a positive polarity terminal of the adjusted voltage Vstep1, a first terminal of the second switch Sb is connected to a negative polarity terminal of the adjusted voltage Vstep1 and connected to the DC voltage V1. A second terminal of the first switch Sa is connected to a second terminal of the second switch Sb for providing a positive voltage terminal of the output voltage Vo (i.e., the step-changed DC voltage Vx) to a ground terminal.

Accordingly, when the first switch Sa is turned on and the second switch Sb is turned off, the output voltage Vo (i.e., the step-changed DC voltage Vx) is equal to the DC voltage V1 plus the adjusted voltage Vstep1. When the first switch Sa is turned off and the second switch Sb is turned on, the output voltage Vo (i.e., the step-changed DC voltage Vx) is equal to the DC voltage V1. Therefore, the step increase (i.e., V1+Vstep1, where the Vstep1 is positive) control or the step decrease (i.e., V1+Vstep1, where the Vstep1 is negative) control of the DC voltage V1 is achieved, as shown in the waveform of FIG. 8B.

Please refer to FIG. 3, which shows a block diagram of the power conversion system with voltage step change and voltage polarity conversion according to a third embodiment of the present disclosure. The power conversion system includes a three-phase AC-to-DC conversion circuit 100, a plurality of DC-to-DC conversion circuits 201,202, a first voltage polarity conversion circuit 401, a second voltage polarity conversion circuit 402, and a voltage step change circuit 300. In the embodiment, the number of the plurality of DC-to-DC conversion circuits 201,202 is two as an example, that is, the plurality of DC-to-DC conversion circuits 201,202 include a first DC-to-DC conversion circuit 201 and a second DC-to-DC conversion circuit 202.

The three-phase AC-to-DC conversion circuit 100 receives a three-phase power supply Vac, and converts the three-phase power supply Vac into a DC power supply Vdc. The two DC-to-DC conversion circuits 201,202 receive the DC power supply Vdc, and respectively convert the DC power supply Vdc to generate a DC voltage V1 and a voltage Vp1. In the embodiment, the first DC-to-DC conversion circuit 201 receives the DC power supply Vdc, and converts the DC power supply Vdc to generate the DC voltage V1. The second DC-to-DC conversion circuit 202 receives the DC power supply Vdc, and converts the DC power supply Vdc to generate the voltage Vp1.

The first voltage polarity conversion circuit 401 receives the DC voltage V1, and converts a polarity of the DC voltage V1 to provide a polarity conversion DC voltage V1'. The second voltage polarity conversion circuit 402 receives the voltage Vp1, and converts a polarity of the voltage Vp1 to provide an adjusted voltage Vstep1. The voltage step change circuit 300 receives the polarity conversion DC voltage V1' and the adjusted voltage Vstep1, and adds the polarity conversion DC voltage V1' and the adjusted voltage Vstep1 to provide a DC output voltage Vo1.

Regarding the operation of the voltage step change circuit 300, it is similar to the second embodiment, and therefore please refer to FIG. 8A and FIG. 8B. The main difference is that the input voltage V1 of FIG. 8A corresponds to the DC voltage V1 of FIG. 2, and corresponds to the polarity conversion DC voltage V1' of FIG. 3. Therefore, the step increase (i.e., V1'+Vstep1, where the Vstep1 is positive) control or the step decrease (i.e., V1'+Vstep1, where the Vstep1 is negative) control of the polarity conversion DC voltage V1' is achieved.

For a detailed description of the first DC-to-DC conversion circuit 201 and the second DC-to-DC conversion circuit 202 as well as the first voltage polarity conversion circuit 401 and the second voltage polarity conversion circuit 402 in this embodiment, please refer to the previous description and will not be repeated here.

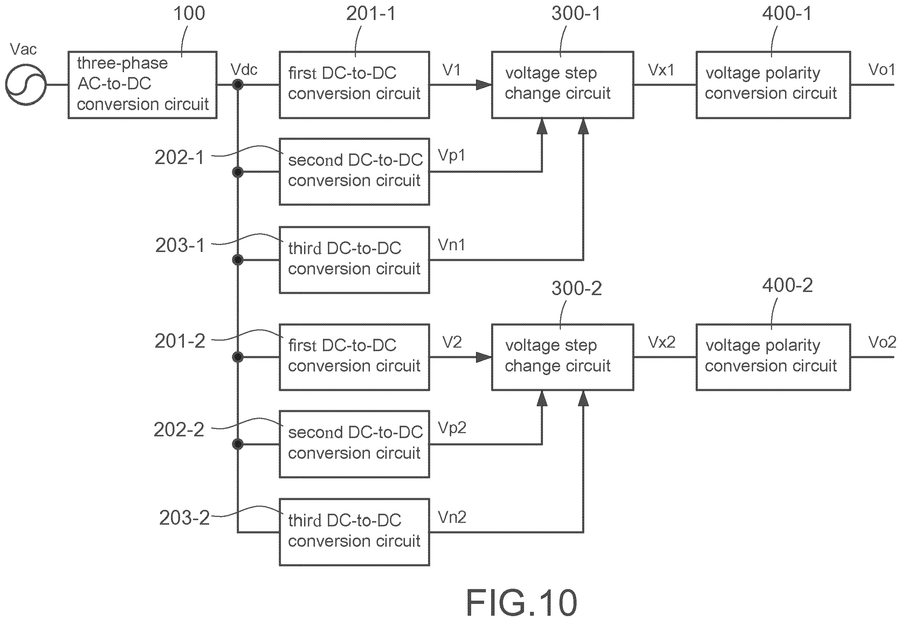

Please refer to FIG. 10, which shows a block diagram of a power conversion system including the two power conversion structures in FIG. 1, and also refer to FIG. 1. The main difference between FIG. 10 and FIG. 1 is that, in addition to sharing the three-phase AC-to-DC conversion circuit 100, FIG. 10 includes two sets of power conversion structures, or dual-channel output structures as shown in FIG. 1. However, the present invention is not limited to two sets of power conversion structures. The three DC-to-DC conversion circuits 201-1,202-1,203-1 of the first set of power conversion structure receive the DC power supply Vdc, and respectively convert the DC power supply Vdc to generate the DC voltage V1, the first voltage Vp1, and the second voltage Vn1. Similarly, the three DC-to-DC conversion circuits 201-2,202-2,203-2 of the second set of power conversion structure receive the DC power supply Vdc, and respectively convert the DC power supply Vdc to generate the DC voltage V2, the first voltage Vp2, and the second voltage Vn2.

The voltage step change circuit 300-1 of the first set of power conversion structure receives the DC voltage V1, the first voltage Vp1, and the second voltage Vn1. The voltage step change circuit 300-1 adds the first voltage Vp1 to the DC voltage V1 or subtracts the second voltage Vn1 from the DC voltage V1 so as to provide a step-changed DC voltage Vx1. Similarly, the voltage step change circuit 300-2 of the second set of power conversion structure receives the DC voltage V2, the first voltage Vp2, and the second voltage Vn2. The voltage step change circuit 300-2 adds the first voltage Vp2 to the DC voltage V2 or subtracts the second voltage Vn2 from the DC voltage V2 so as to provide a step-changed DC voltage Vx2.

The voltage polarity conversion circuit 400-1 of the first set of power conversion structure receives the step-changed DC voltage Vx1, and converts a polarity of the step-changed DC voltage Vx1 to provide a DC output voltage Vo1. Similarly, the voltage polarity conversion circuit 400-2 of the second set of power conversion structure receives the step-changed DC voltage Vx2, and converts a polarity of the step-changed DC voltage Vx2 to provide a DC output voltage Vo2.

Since the circuit components, structural connections, and operations of the second set of power conversion structure are the same as those of the first set of power conversion, more sets of power outputs can be provided, which will not be described in detail here.

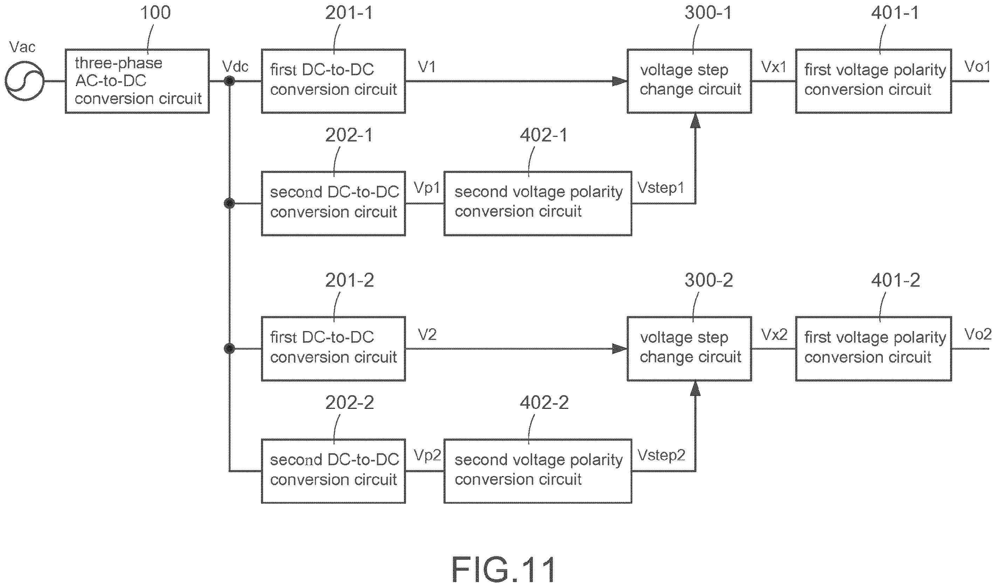

Please refer to FIG. 11, which shows a block diagram of a power conversion system including the two power conversion structures in FIG. 2, and also refer to FIG. 2. The main difference between FIG. 11 and FIG. 2 is that, in addition to sharing the three-phase AC-to-DC conversion circuit 100, FIG. 11 includes two sets of power conversion structures, or dual-channel output structures as shown in FIG. 2. However, the present invention is not limited to two sets of power conversion structures. The two DC-to-DC conversion circuits 201-1,202-1 of the first set of power conversion structure receive the DC power supply Vdc, and respectively convert the DC power supply Vdc to generate the DC voltage V1 and the voltage Vp1. Similarly, the two DC-to-DC conversion circuits 201-2,202-2 of the second set of power conversion structure receive the DC power supply Vdc, and respectively convert the DC power supply Vdc to generate the DC voltage V2 and the voltage Vp2.

The second voltage polarity conversion circuit 402-1 of the first set of power conversion structure receives the voltage Vp1, and converts a polarity of the voltage Vp1 to provide an adjusted voltage Vstep1. Similarly, the second voltage polarity conversion circuit 402-2 of the second set of power conversion structure receives the voltage Vp2, and converts a polarity of the voltage Vp2 to provide an adjusted voltage Vstep2.

The voltage step change circuit 300-1 of the first set of power conversion structure receives the DC voltage V1 and the adjusted voltage Vstep1, and adds the DC voltage V1 to the adjusted voltage Vstep1 to provide a step-changed DC voltage Vx1. Similarly, the voltage step change circuit 300-2 of the second set of power conversion structure receives the DC voltage V2 and the adjusted voltage Vstep2, and adds the DC voltage V2 to the adjusted voltage Vstep2 to provide a step-changed DC voltage Vx2.

The first voltage polarity conversion circuit 401-1 of the first set of power conversion structure receives the step-changed DC voltage Vx1, and converts a polarity of the step-changed DC voltage Vx1 to provide a DC output voltage Vo1. Similarly, the first voltage polarity conversion circuit 401-2 of the second set of power conversion structure receives the step-changed DC voltage Vx2, and converts a polarity of the step-changed DC voltage Vx2 to provide a DC output voltage Vo2.

Since the circuit components, structural connections, and operations of the second set of power conversion structure are the same as those of the first set of power conversion, more sets of power outputs can be provided, which will not be described in detail here.

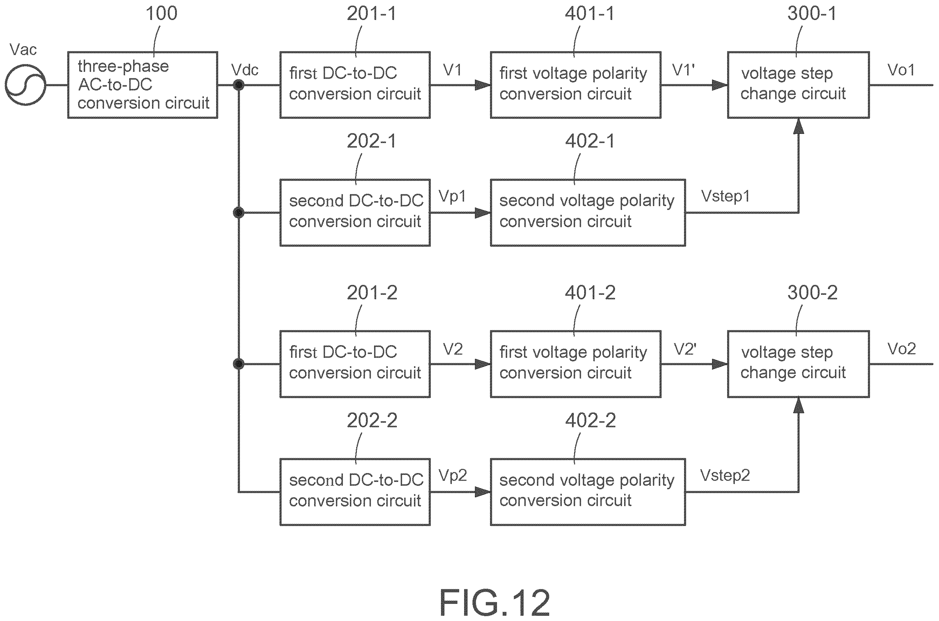

Please refer to FIG. 12, which shows a block diagram of a power conversion system including the two power conversion structures in FIG. 3, and also refer to FIG. 3. The main difference between FIG. 12 and FIG. 3 is that, in addition to sharing the three-phase AC-to-DC conversion circuit 100, FIG. 12 includes two sets of power conversion structures, or dual-channel output structures as shown in FIG. 3. However, the present invention is not limited to two sets of power conversion structures. The two DC-to-DC conversion circuits 201-1,202-1 of the first set of power conversion structure receive the DC power supply Vdc, and respectively convert the DC power supply Vdc to generate the DC voltage V1 and the voltage Vp1. Similarly, the two DC-to-DC conversion circuits 201-2,202-2 of the second set of power conversion structure receive the DC power supply Vdc, and respectively convert the DC power supply Vdc to generate the DC voltage V2 and the voltage Vp2.

The first voltage polarity conversion circuit 401-1 of the first set of power conversion structure receives the DC voltage V1, and converts a polarity of the DC voltage V1 to provide a polarity conversion DC voltage V1'. Similarly, the first voltage polarity conversion circuit 401-2 of the second set of power conversion structure receives the DC voltage V2, and converts a polarity of the DC voltage V2 to provide a polarity conversion DC voltage V2'.

The second voltage polarity conversion circuit 402-1 of the first set of power conversion structure receives the voltage Vp1, and converts a polarity of the voltage Vp1 to provide an adjusted voltage Vstep1. Similarly, the second voltage polarity conversion circuit 402-2 of the second set of power conversion structure receives the voltage Vp2, and converts a polarity of the voltage Vp2 to provide an adjusted voltage Vstep2.

The voltage step change circuit 300-1 of the first set of power conversion structure receives the polarity conversion DC voltage V1' and the adjusted voltage Vstep1, and adds the polarity conversion DC voltage V1' and the adjusted voltage Vstep1 to provide a DC output voltage Vo1. Similarly, the voltage step change circuit 300-2 of the second set of power conversion structure receives the polarity conversion DC voltage V2' and the adjusted voltage Vstep2, and adds the polarity conversion DC voltage V2' and the adjusted voltage Vstep2 to provide a DC output voltage Vo2.

Since the circuit components, structural connections, and operations of the second set of power conversion structure are the same as those of the first set of power conversion, more sets of power outputs can be provided, which will not be described in detail here.

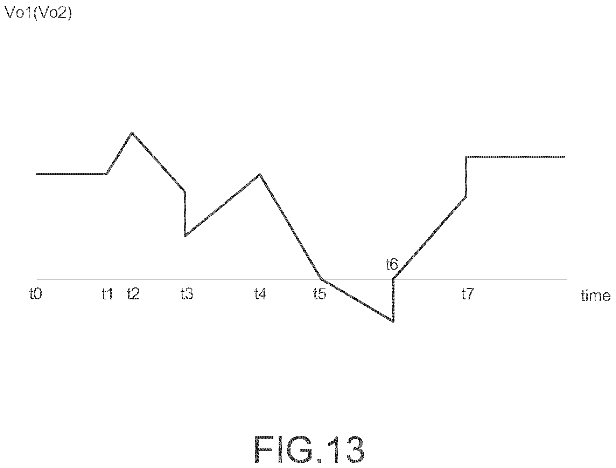

Please refer to FIG. 13, which shows a schematic waveform diagram of a DC output voltage of the power conversion system according to the present disclosure. During the time interval between time t1 and time t2, the DC output voltage Vo1 (and/or the DC output voltage Vo2) is increased by controlling the isolated DC-to-DC conversion unit 21 and the interleaved step-down conversion unit 22 of the DC-to-DC conversion circuit 200. Similarly, During the time interval between time t2 and time t3, the DC output voltage Vo1 (and/or the DC output voltage Vo2) is decreased by controlling the isolated DC-to-DC conversion unit 21 and the interleaved step-down conversion unit 22 of the DC-to-DC conversion circuit 200.

During the time interval between time t5 and time t6, the output voltage is converted from a positive value to a negative value by controlling the first upper switch Q1 and the second lower switch Q4 and the first lower switch Q2 and the second upper switch Q3 of the H-bridge circuit of the voltage polarity conversion circuit 400. At time t6, the output voltage is stepped-up from a negative voltage to zero, or at time t7, the output voltage is stepped-up from a positive voltage by the voltage step change circuit 300. Similarly, at time t3, the voltage is stepped-down by the voltage step change circuit 300. Accordingly, the power conversion system of the present disclosure can generate the output voltage with voltage step changes and voltage polarity conversion.

## Claims

1. A power conversion system with voltage step change and voltage polarity conversion, **characterized in that** the power conversion system comprises:
a three-phase AC-to-DC conversion circuit (100), configured to receive a three-phase power supply (Vac), and convert the three-phase power supply (Vac) into a DC power supply (Vdc),
a plurality of DC-to-DC conversion circuits (200), configured to receive the DC power supply (Vdc), and respectively convert the DC power supply (Vdc) to generate a DC voltage (V1), a first voltage (Vp1), and a second voltage (Vn1),
a voltage step change circuit (300), configured to receive the DC voltage (V1), the first voltage (Vp1), and the second voltage (Vn1), and add the first voltage (Vp1) to the DC voltage (V1) or subtract the second voltage (Vn1) from the DC voltage (V1) so as to provide a step-changed DC voltage (Vx), and
a voltage polarity conversion circuit (400), configured to receive the step-changed DC voltage (Vx), and convert a polarity of the step-changed DC voltage (Vx) to provide a DC output voltage (Vo1).

2. The power conversion system as claimed in claim 1, wherein any one of the plurality of DC-to-DC conversion circuits (200) comprises:
an isolated DC-to-DC conversion unit (21), configured to receive the DC power supply (Vdc), and convert the DC power supply (Vdc) into an isolated DC voltage (Viso),
an interleaved step-down conversion unit (22), configured to receive the isolated DC voltage (Viso), and convert the isolated DC voltage (Viso) into a step-down voltage (Vbuk), and
an active linear filter unit (23), configured to receive the step-down voltage (Vbuk), and convert the step-down voltage (Vbuk) into the DC voltage (V1) or the first voltage (Vp1) or the second voltage (Vn1).

3. The power conversion system as claimed in claim 2, wherein the active linear filter unit (23) comprises:
a transistor switch (231), configured to receive the step-down voltage (Vbuk) with a ripple component,
a driver (232), connected to the transistor switch (231),
an addition/subtraction calculator (234), configured to receive a reference voltage (Vref) and the DC voltage (V1), the first voltage (Vp1), or the second voltage (Vn1) of the active linear filter unit (23), and the addition/subtraction calculator (234) configured to calculate an error voltage (Verr) between the reference voltage (Vref) and the DC voltage (V1), the first voltage (Vp1), or the second voltage (Vn1), and
a controller (233), configured to receive the error voltage (Verr), and generate a filter control signal (Scf) to control the driver (232) to generate a driver signal (Sd) to control the transistor switch (231) so that the DC voltage (V1), the first voltage (Vp1), or the second voltage (Vn1) without the ripple component is provided.

4. The power conversion system as claimed in claim 1, wherein the voltage step change circuit (300) comprises:
a first switch assembly, comprising a first switch (Sa) and a second switch (Sb), and the first switch assembly connected to the first voltage (Vp1), and
a second switch assembly, comprising a third switch (Sc) and a fourth switch (Sd), and the second switch assembly connected to the second voltage (Vn1),
wherein when the first switch (Sa) and the fourth switch (Sd) are turned on and the second switch (Sb) and the third switch (Sc) are turned off, the step-changed DC voltage (Vx) is equal to the DC voltage (V1) plus the first voltage (Vp1), when the second switch (Sb) and the third switch (Sc) are turned on and the first switch (Sa) and the fourth switch (Sd) are turned off, the step-changed DC voltage (Vx) is equal to the DC voltage (V1) minus the second voltage (Vn1),
wherein a first terminal of the first switch (Sa) is connected to a positive polarity terminal of the first voltage (Vp1), a first terminal of the second switch (Sb) is connected to a negative polarity terminal of the first voltage (Vp1) and connected to the DC voltage (V1), a second terminal of the first switch (Sa) is connected to a second terminal of the second switch (Sb) for providing a positive voltage terminal of the step-changed DC voltage (Vx),
wherein a first terminal of the third switch (Sc) is connected to a negative polarity terminal of the second voltage (Vn1), a first terminal of the fourth switch (Sd) is connected to a positive polarity terminal of the second voltage (Vn1) and connected to a ground terminal,
a second terminal of the third switch (Sc) is connected to a second terminal of the fourth switch (Sd) for providing a negative voltage terminal of the step-changed DC voltage (Vx).

5. The power conversion system as claimed in claim 1, wherein the voltage polarity conversion circuit (400) comprises:
a first bridge arm, comprising a first upper switch (Q1) and a first lower switch (Q2) connected in series, and
a second bridge arm, connected to the first bridge arm in parallel, the second bridge arm comprising a second upper switch (Q3) and a second lower switch (Q4) connected in series,
wherein the first upper switch (Q1) and the second lower switch (Q4) are simultaneously turned on or turned off, the first lower switch (Q2) and the second upper switch (Q3) are simultaneously turned on or turned off.

6. A power conversion system with voltage step change and voltage polarity conversion, comprising:
a three-phase AC-to-DC conversion circuit (100), configured to receive a three-phase power supply (Vac), and convert the three-phase power supply (Vac) into a DC power supply (Vdc),
a plurality of DC-to-DC conversion circuits (200), configured to receive the DC power supply (Vdc), and respectively convert the DC power supply (Vdc) to generate a DC voltage (V1) and a voltage,
a second voltage polarity conversion circuit (402), configured to receive the voltage, and convert a polarity of the voltage to provide an adjusted voltage (Vstep1),
a voltage step change circuit (300), configured to receive the DC voltage (V1) and the adjusted voltage (Vstep1), and add the DC voltage (V1) to the adjusted voltage (Vstep1) to provide a step-changed DC voltage (Vx), and
a first voltage polarity conversion circuit (401), configured to receive the step-changed DC voltage (Vx), and convert a polarity of the step-changed DC voltage (Vx) to provide a DC output voltage (Vo1).

7. The power conversion system as claimed in claim 6, wherein any one of the plurality of DC-to-DC conversion circuits (200) comprises:
an isolated DC-to-DC conversion unit (21), configured to receive the DC power supply (Vdc), and convert the DC power supply (Vdc) into an isolated DC voltage (Viso),
an interleaved step-down conversion unit (22), configured to receive the isolated DC voltage (Viso), and convert the isolated DC voltage (Viso) into a step-down voltage (Vbuk), and
an active linear filter unit (23), configured to receive the step-down voltage (Vbuk), and convert the step-down voltage (Vbuk) into the DC voltage (V1) or the voltage.

8. The power conversion system as claimed in claim 7, wherein the active linear filter unit (23) comprises:
a transistor switch (231), configured to receive the step-down voltage (Vbuk) with a ripple component,
a driver (232), connected to the transistor switch (231),
an addition/subtraction calculator (234), configured to receive a reference voltage (Vref) and the DC voltage (V1) or the voltage of the active linear filter unit (23), and the addition/subtraction calculator (234) configured to calculate an error voltage (Verr) between the reference voltage (Vref) and the DC voltage (V1) or the voltage, and
a controller (233), configured to receive the error voltage (Verr), and generate a filter control signal (Scf) to control the driver (232) to generate a driver signal (Sd) to control the transistor switch (231) so that the DC voltage (V1) or the voltage without the ripple component is provided.

9. The power conversion system as claimed in claim 6, wherein the voltage step change circuit (300) comprises:
a switch assembly, comprising a first switch (Sa) and a second switch (Sb), and the switch assembly connected to the adjusted voltage (Vstep1),
wherein when the first switch (Sa) is turned on and the second switch (Sb) is turned off, the step-changed DC voltage (Vx) is equal to the DC voltage (V1) plus the adjusted voltage (Vstep1); when the first switch (Sa) is turned off and the second switch (Sb) is turned on, the step-changed DC voltage (Vx) is equal to the DC voltage (V1),
wherein a first terminal of the first switch (Sa) is connected to a positive polarity terminal of the adjusted voltage (Vstep1), a first terminal of the second switch (Sb) is connected to a negative polarity terminal of the adjusted voltage (Vstep1) and connected to the DC voltage (V1),
wherein a second terminal of the first switch (Sa) is connected to a second terminal of the second switch (Sb) for providing a positive voltage terminal of the step-changed DC voltage (Vx) to a ground terminal.

10. The power conversion system as claimed in claim 6, wherein one of the first voltage polarity conversion circuit (401) and the second voltage polarity conversion circuit (402) comprises:
a first bridge arm, comprising a first upper switch (Q1) and a first lower switch (Q2) connected in series, and
a second bridge arm, connected to the first bridge arm in parallel, the second bridge arm comprising a second upper switch (Q3) and a second lower switch (Q4) connected in series,
wherein the first upper switch (Q1) and the second lower switch (Q4) are simultaneously turned on or turned off, the first lower switch (Q2) and the second upper switch (Q3) are simultaneously turned on or turned off.

11. A power conversion system with voltage step change and voltage polarity conversion, comprising:
a three-phase AC-to-DC conversion circuit (100), configured to receive a three-phase power supply (Vac), and convert the three-phase power supply (Vac) into a DC power supply (Vdc),
a plurality of DC-to-DC conversion circuits (200), configured to receive the DC power supply (Vdc), and respectively convert the DC power supply (Vdc) to generate a DC voltage (V1) and a voltage,
a first voltage polarity conversion circuit (401), configured to receive the DC voltage (V1), and convert a polarity of the DC voltage (V1) to provide a polarity conversion DC voltage (V1'),
a second voltage polarity conversion circuit (402), configured to receive the voltage, and convert a polarity of the voltage to provide an adjusted voltage (Vstep1), and
a voltage step change circuit (300), configured to receive the polarity conversion DC voltage (V1') and the adjusted voltage (Vstep1), and add the polarity conversion DC voltage (V1') to the adjusted voltage (Vstep1) to provide a DC output voltage (Vo1).

12. The power conversion system as claimed in claim 11, wherein any one of the plurality of DC-to-DC conversion circuits (200) comprises:
an isolated DC-to-DC conversion unit (21), configured to receive the DC power supply (Vdc), and convert the DC power supply (Vdc) into an isolated DC voltage (Viso),
an interleaved step-down conversion unit (22), configured to receive the isolated DC voltage (Viso), and convert the isolated DC voltage (Viso) into a step-down voltage (Vbuk), and
an active linear filter unit (23), configured to receive the step-down voltage (Vbuk), and convert the step-down voltage (Vbuk) into the DC voltage (V1) or the voltage.

13. The power conversion system as claimed in claim 12, wherein the active linear filter unit (23) comprises:
a transistor switch (231), configured to receive the step-down voltage (Vbuk) with a ripple component,
a driver (232), connected to the transistor switch (231),
an addition/subtraction calculator (234), configured to receive a reference voltage (Vref) and the DC voltage (V1) or the voltage of the active linear filter unit (23), and the addition/subtraction calculator (234) configured to calculate an error voltage (Verr) between the reference voltage (Vref) and the DC voltage (V1) or the voltage, and
a controller (233), configured to receive the error voltage (Verr), and generate a filter control signal (Scf) to control the driver (232) to generate a driver signal (Sd) to control the transistor switch (231) so that the DC voltage (V1) or the voltage without the ripple component is provided.

14. The power conversion system as claimed in claim 11, wherein the voltage step change circuit (300) comprises:
a switch assembly, comprising a first switch (Sa) and a second switch (Sb), and the switch assembly connected to the adjusted voltage (Vstep1),
wherein when the first switch (Sa) is turned on and the second switch (Sb) is turned off, the DC output voltage (Vo1) is equal to the polarity conversion DC voltage (V1') plus the adjusted voltage (Vstep1); when the first switch (Sa) is turned off and the second switch (Sb) is turned on, the DC output voltage (Vo1) is equal to the polarity conversion DC voltage (V1'),
wherein a first terminal of the first switch (Sa) is connected to a positive polarity terminal of the adjusted voltage (Vstep1), a first terminal of the second switch (Sb) is connected to a negative polarity terminal of the adjusted voltage (Vstep1) and connected to the DC voltage (V1),
wherein a second terminal of the first switch (Sa) is connected to a second terminal of the second switch (Sb) for providing a positive voltage terminal of the DC output voltage (Vo1) to a ground terminal.

15. The power conversion system as claimed in claim 11, wherein one of the first voltage polarity conversion circuit (401) and the second voltage polarity conversion circuit (402) comprises:
a first bridge arm, comprising a first upper switch (Q1) and a first lower switch (Q2) connected in series, and
a second bridge arm, connected to the first bridge arm in parallel, the second bridge arm comprising a second upper switch (Q3) and a second lower switch (Q4) connected in series,
wherein the first upper switch (Q1) and the second lower switch (Q4) are simultaneously turned on or turned off, the first lower switch (Q2) and the second upper switch (Q3) are simultaneously turned on or turned off.
